# EUROPEAN PATENT APPLICATION

(11) **EP 2 255 918 A1**
(43) Date of publication of application: **01.12.2010**
(21) Application number: 08736721.5
(22) Date of filing: 03.03.2008
(51) Int. Cl.: B23K 20/12

(54) **MACHINE-TOOL FOR FRICTION STIR WELDING**

(71) Applicant: FUNDACION FATRONIK, 20009 San Sebastian (ES)
(72) Inventor: LARRAÑAGA LETURIA, Josu, E-20009 San Sebastian (ES); PENALVA OSCOZ, Mari, Luz, E-20009 San Sebastian (ES); RIVERO RASTRERO, María, Asunción, E-20009 San Sebastian (ES)
(74) Representative: Carpintero Lopez, Francisco
(86) International application number: PCT/ES2008/000119
(87) International publication number: WO 2009/109668

(57) **Abstract**

The machine tool for friction stir welding of two metal pieces of the invention comprises a shoulder (1) with a flat end configured to apply pressure on the metal pieces to be welded and a retractable pin (2) at said flat end configured to heat and displace a material of the metal pieces to be welded, the position of the pin (2) being controlled by a first control system and the position of the shoulder (1) by a second control system. Said first control system is configured to generate a forced oscillation of the pin (2) between a first penetration threshold (3) and a second penetration threshold (4), causing a more flexible and faster control capable of acting more rapidly faced with disturbances on the metal pieces to be welded.

## Description

### FIELD OF THE INVENTION

The present invention belongs to the field machine tools. More particularly, it relates to a machine tool for friction stir welding.

### BACKGROUND OF THE INVENTION

Friction stir welding (FSW) has been invented, patented and developed for its industrial purpose by TWI (The Welding Institute), in Cambridge, United Kingdom. Patent US 5460317 discloses said friction stir welding process and constitutes the most descriptive text of this new welding technique.

Friction welding is a solid phase joining technique, without provision of material where the initial characteristics of the material last. Using friction welding it is possible to weld materials of different thickness obtaining excellent mechanical properties and producing a very small distortion in the welded pieces.

The basic concept is a non-consumable rotatory tool with a pin and a shoulder, specifically designed for this process, i.e. said pin and shoulder are not valid for any other similar process, the pin is inserted between the adjacent ends of the plates to be welded and crosses the whole joint line guided by the shoulder. Two types of tools are known: the first and most basic is the rigid tool, where the pin does not have relative movement with respect to the shoulder. On the other hand, there are tools where the pin has a relative movement with respect to the shoulder, calling this tool "FSW tool with retracting pin".

Today, the FSW process is controlled by four control inputs: the pressure applied on the shoulder, the travel speed, the tool rotation and the pin position. The objective of the control is to maintain the process in conditions within a predetermined window delimited by the force parameters exercised by shoulder, travel speed, rotational speed and pin penetration.

The real inputs of the process are heat generation and the deformation velocity provided to the pieces to join. These inputs are directly related to the inputs to control, with a complex relation due to the coefficient ratio. Any variation in the friction coefficient would change the deformation and heat input.

In the case of the tool with retracting pin, the penetration of the shoulder and the penetration of the pin along the join line between the plates to be welded have independent control loops, which may be controlled by the reading of the position or force. The control of the shoulder penetration is usually performed by a controlled force loop by hydraulic actuator. On the other hand, the depth of insertion of the pin is controlled by an optical rule placed on the head. This method achieves the indirect measurement of the pin, since the depth of shoulder penetration is not known; only the pressure applied to the piece is known. Although it is possible to calculate the shoulder penetration, it is not possible to know what the exact position of the pin is due to the machine deformations and the rule resolution.

The technical problem of this method is that it is difficult to correctly position the pin during the trajectory. In friction stir welding, the penetration of the tool in the piece to be welded is critical. If it is too large it creates irregularities in the material and may cause fissures therein. On the other hand, if it is too small, defects are known such as lack of penetration (LOP) which makes fissures appear on the welded surface. Said fissures appear on the rear surface of the welding.

The quality of the welding is, therefore, highly dependent on the pin depth, the latter being a parameter difficult to control in position due to the forces exerted in the process and irregularities of the material to be welded.

With the aforementioned control for the trajectories of the pin, it has been possible to verify that the strategies used today are trajectories which tend to soften the pin movement profile. At the time when a discontinuity appears, the distance of the pin to the edge of the piece changes, which means it is necessary to make a correction of this distance. In the case of the current controls, it is attempted that the pin is always placed on a previously programmed curve. Today, the control of the pin is carried out by indirect reading of the position, but the problem is that when a discontinuity appears, the control takes a while to respond, and it may occur that for when the machine responds, the discontinuity has finished and the correction of the pin position is not necessary at that time. Therefore, this type of control usually has response problems with problems localized in the machine or in the properties of the material.

The problems just commented can also be observed in patents US 5697544, US 5713507, US 5813592, US 6421578, US 6595403, US 2002/0179673 and WO 0128732.

### DESCRIPTION OF THE INVENTION

The invention relates to a machine tool for friction stir welding. With said machine tool, the welding of two metal pieces is performed without the provision of additional material being necessary. The tool for friction welding comprises a shoulder with a flat end configured to apply pressure to the metal pieces to be welded and communicate heat through the friction produced and a rotatory retractable pin at said flat end configured to displace a material of the metal pieces to be welded from the front part of the pin to the rear part thereof in its rotation, thus performing the welding. The retractable pin can protrude from or be retracted in the flat end of the shoulder as necessary and in accordance with the thickness of the metal pieces to be welded or of the possible imperfections or irregularities of said pieces.

In this sense, the position of the pin is controlled by a first control system and the position of the shoulder by a second control system.

In accordance with a first aspect of the invention, the control system is configured to generate a forced oscillation of the pin between a first penetration threshold and a second penetration threshold. This forced oscillation improves the stir of the material of the metal pieces since it increases the temperature and the stir of said material and it may resolve the problem of lack of penetration.

The forced oscillation of the pin makes it possible that the first control system can, in each oscillation cycle, correct possible disturbances, changes in thickness or anomalies in the pieces to be welded, therefore being a quicker control than those disclosed in the state of the art, which present a marked delay in their response. In this way, it is also managed to resolve the problem of lacks of penetration.

Additionally, the first penetration threshold and the second penetration threshold may surround, envelope or confine a calculated theoretic penetration for the performance of the welding. The fact that the pin is continually oscillating between the first penetration threshold and the second penetration threshold and that the theoretic penetration is between both values, causes, in macroscopic terms, that the result obtained is equivalent to a welding performed at this theoretic penetration, but with the aforementioned advantages, such as the solution of the LOP problem.

The first control system may have an input signal, which will be the setpoint or desired penetration value to perform the welding. The control will be a closed loop control with a control module which produces a control signal, a plant which acts on the pin and additionally a relay with a gain which is integrated in the plant. The gain of said relay will be such that it can cause the first control system to be unstable. The gain of the relay corresponds to the value of its output and has a direct relation with the amplitude of the pin oscillation.

The gain of the relay may change sign when the control signal of said relay, which corresponds to the input signal of the relay, changes sign. In other words, if the gain, for example, is set at 4, for a positive control signal, the gain or output of the relay will be 4, whilst if the control signal is negative, the gain or output of the relay will be -4.

To the first control system described there could be added a white noise or dither which will be added to the control signal, the input signal of the relay being the sum of both signals. Without this white noise, small oscillations around zero could change quick changes of the gain of the relay which are not justified. The white noise is designed so that it acts as hysteresis, i.e. the changes in gain of the relay are carried out when a certain threshold has been exceeded so that there is a certain certainty that the change in sign produced should be manifested in a change in sign of the relay gain.

The first control system may additionally comprise a gain changer with an input signal and an output signal. The input signal of the gain changer may be related to the input signal of the control module, for example, filtering said input signal of the control signal and applying said filtered signal to the gain changer. The output signal of the gain changer can affect the value of the gain of the relay, so that modifying the gain of the relay maintains the oscillations of the pin within the defined thresholds.

In accordance with a second aspect of the invention, this relates to the process carried out by the aforementioned machine tool. Said process is based on producing a forced oscillation of the pin between a first penetration threshold and a second penetration threshold. Creating this forced oscillation provokes that the response of the machine tool is quicker in the event of possible disturbances, it being possible that they are connected to the irregularities on the surface of the pieces to join, such as a discontinuity on the surface or a step, or irregularities in the mechanical properties of the pieces to join, such as, for example, the hardness of the material.

The oscillations between the first penetration threshold and the second penetration threshold could be such that between said thresholds a calculated theoretic penetration is found. This means that in each oscillation cycle, the pin will occupy the calculated theoretical position at least twice.

The process can include a stage wherein a gain is produced which acts as input signal of a plant of a feedback control system which controls the pin position. Like all feedback control systems, this will consist of an input signal, or setpoint, which is the signal that is desired to be obtained at the output, in this case, the objective is the pin penetration. The error which is observed in said signal, obtaining said error as difference between the input signal, the desired setpoint or the target penetration for the pin, and the output signal, the measured penetration of the pin, will be the input signal of a control module strictly speaking. The output signal of the control module is what traditionally acts as input signal of the plant. In the present invention this is not the case since there is a stage which provokes that the plant corresponds to the established gain. The module of said gain will not be affected by the output signal of the control module, the sign of the gain will only change if the sign of the control module output signal is modified. So that these changes are not erratic, there may be an additional stage which adds a white noise to the output signal of the control module so that this white noise creates a hysteresis, so that the changes which are produced in the gain sign are base on a stable situation with regards to the sign in at least an established period of time. In other words, the white noise will be such that oscillations around the sign change do not cause sign changes in the gain until said oscillations have been exceeded.

There may be an additional stage which causes the change of the module of the gain. This change in the gain will seek that the pin oscillation is maintained between the first penetration threshold and the second penetration threshold. To carry out this change in gain, it is possible to observe the input of the control module and depending on this measurement, decide the new gain value, so that it ensures that the pin remains within the established thresholds.

### DESCRIPTION OF THE DRAWINGS

To complement the description being made and with the aim of aiding a better understanding of the characteristics of the invention, in accordance with a preferred practical embodiment thereof, a set of drawings is attached as an integral part of said description, wherein the following has been portrayed for illustrative and not limitative purposes:
- Figure 1.: Shows a view of a machine tool for conventional friction stir welding.
- Figure 2.: Shows an operating mode of the machine tool for friction stir welding of a machine according to the present invention.
- Figure 3.: Shows the control system wherein essential elements have been added to carry out the control of the invention.
- Figure 4.: Shows a second embodiment of the control system of the invention.
- Figure 5.: Shows the response of a conventional machine to a disturbance in the characteristics of the material of the pieces to be welded.
- Figure 6.: Shows the response of a machine according to the present invention to a disturbance in the characteristic of the material of the pieces to be welded.

### PREFERRED EMBODIMENT OF THE INVENTION

Below, with reference to the figures, a preferred embodiment is described of the machine tool for friction stir welding which constitutes the object of this invention.

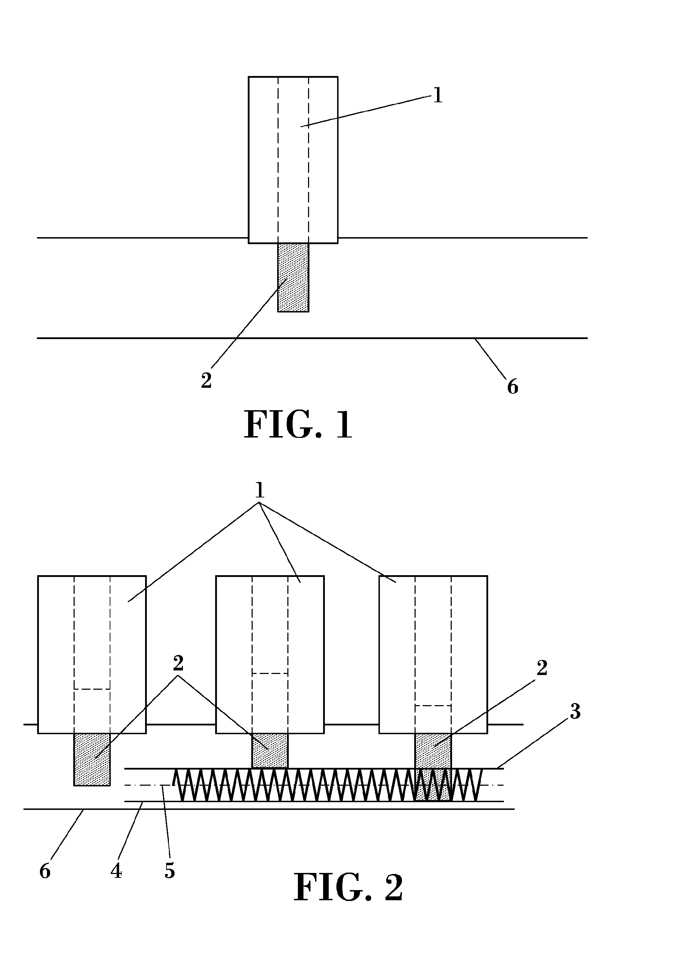

Figure 1 shows the conventional configuration of a machine tool for friction stir welding. Herein, a shoulder (1) and a pin (2) joined to said shoulder (1) can be observed.

The pin (2) completely penetrates the material of the metal pieces to be welded and runs throughout the join line of the metal pieces. The pin (2) is profiled in a similar manner to a thread or a helix, thus facilitating the transport of the material in its surroundings. The movement of the pin (2) is controlled by a first control system.

The shoulder (1) ensures a correct positioning of the tools, provides frictional heat via its rotation and the pressure it exerts on the surface of the metal pieces to be welded and avoids that the material plasticized due to heat comes out to the surface of the metal pieces to be welded during the welding process. A second control system collaborates in all these functions.

The control systems for the pin (2) trajectory used in configurations such as the above tend to soften the movement profile of the pin (2). At the time when a discontinuity appears, the distance of the pin (2) to the edge of the piece changes, for which reason it is necessary to make a correction of this distance. In the case of current controls, the response may be executed with a delay such that it makes possible that it no longer makes sense when it is carried out.

Figure 2 shows the template that the penetration of the pin (2) follows in the metal pieces to be welded with a machine tool according to the present invention. As can be observed, it corresponds to a forced oscillation. Said oscillation oscillates between a first penetration threshold (3) and a second penetration threshold (4). Said penetration thresholds are situated around a calculated theoretic penetration (5).

The oscillatory movement is provoked by the interaction of two aspects of the invention. In first place, the gain of the relay (7) of the first control system will be such that it provokes the instability of the first control system. In second place, this unstable movement of the pin (2) will be confined between a first penetration threshold (3) and a second penetration threshold (4).

The first penetration threshold (3) and the second penetration threshold (4) are defined such that the separation is not over, for example, 0.1 millimetres. Likewise, it recommends as an approximate value of the second penetration threshold (4) 0.05 millimetres, for example, from the side of the metal piece not penetrated (6) by the pin (2). Therefore, the first penetration threshold (3) can be situated at a distance of 0.15 millimetres from the side of the metal piece not penetrated (6) by the pin (2). With these values, the additional loads suffered by the machine tool do not substantially differ from the design of a conventional machine tool.

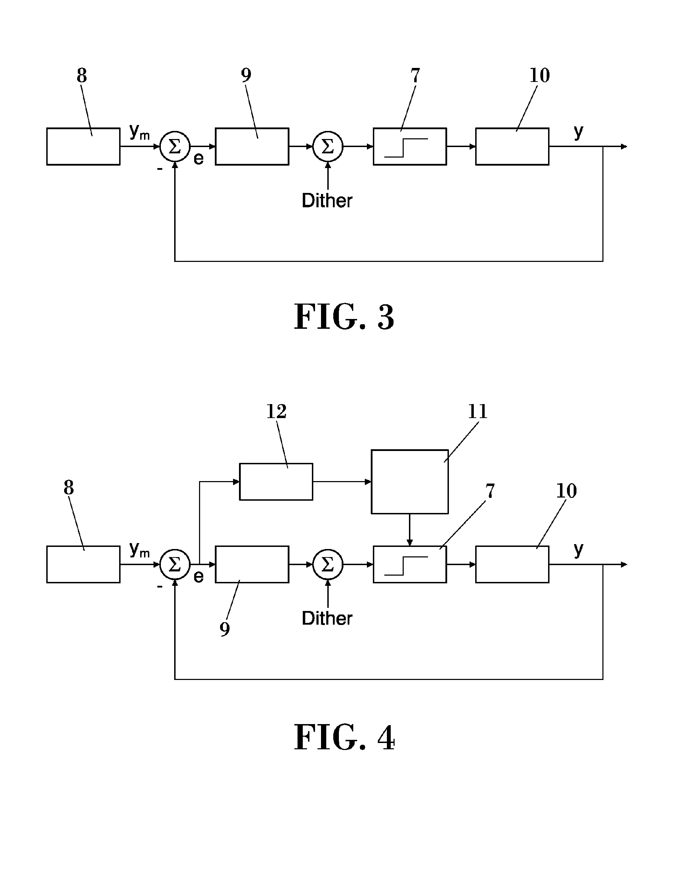

The first control system consists of a closed loop control. The input signal is produced by a modelling of the welding that it is desired to determine the evolution that the pin (2) has to undergo, represented in the figures by the model (8). The deviation suffered with respect to said evolution calculated acts as input signal (e) of a control module (9) whose output signal corresponds to the input signal of the plant (10), i.e. of the system used to actuate the pin (2). Additionally, the present invention proposes adding a relay (7) with a gain that acts on the plant (10) and a white noise or dither that is superimposed on the control signal with the function that will be stated below. Said control system is represented in figure 3. In this way, the plant (10) will always see as input a signal with a module equal to the gain of the relay (7). Said gain will have a positive or negative value in accordance with the sign of the signal control (9). A positive gain will correspond to a positive control signal, a negative gain to a negative signal. In the control system of figure 3, the module of the gain of the relay (7) will be constant. The white noise, on adding it to the output signal of the control module (9) eliminates the noise and the numerical errors of said input signal of the control module (9), improving the dynamic behaviour of the relay. (7). This white noise achieves that alterations on a value close to zero do not involve sudden changes of the gain and, therefore, of the input to the plant (10).

The aforementioned control can be modified by adding as input signal to the relay (7) a gain changer (11) signal, previously filtered through a filter (12) as in the case represented, or not. The input signal of the gain changer (11) is related to the input signal of the control module (9). The gain changer (11) signal modifies the gain of the relay (7). By modifying the gain of the relay (7) the amplitude of the oscillations is modified. Therefore, the gain changer (11) must observe the input signal of the control module (9), to be capable of evaluating the appropriate gain of the relay (7) to achieve the oscillation of the pin (2) in the desired penetration thresholds (3, 4).

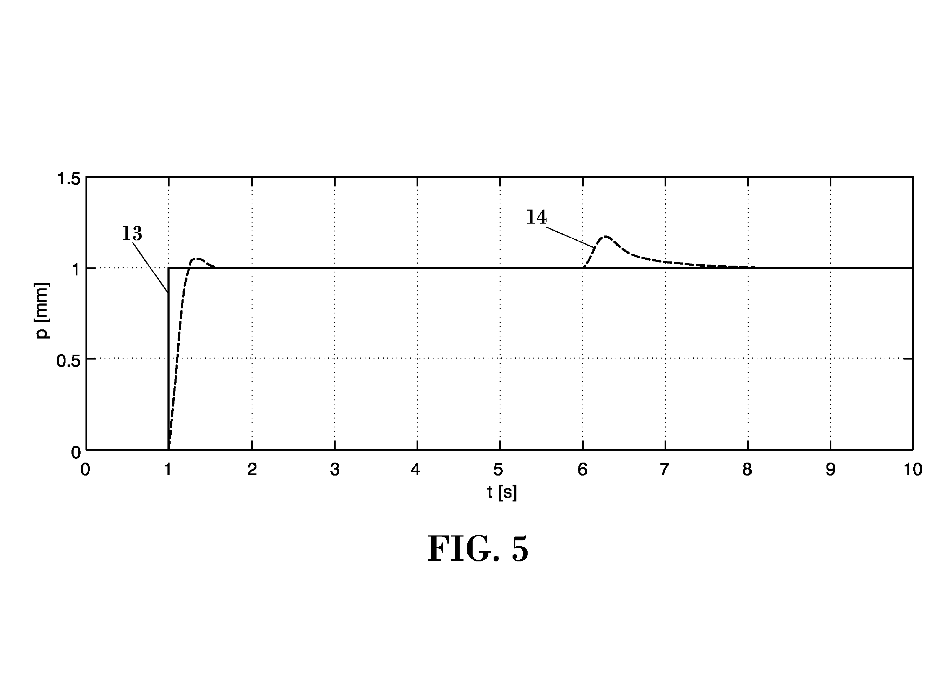

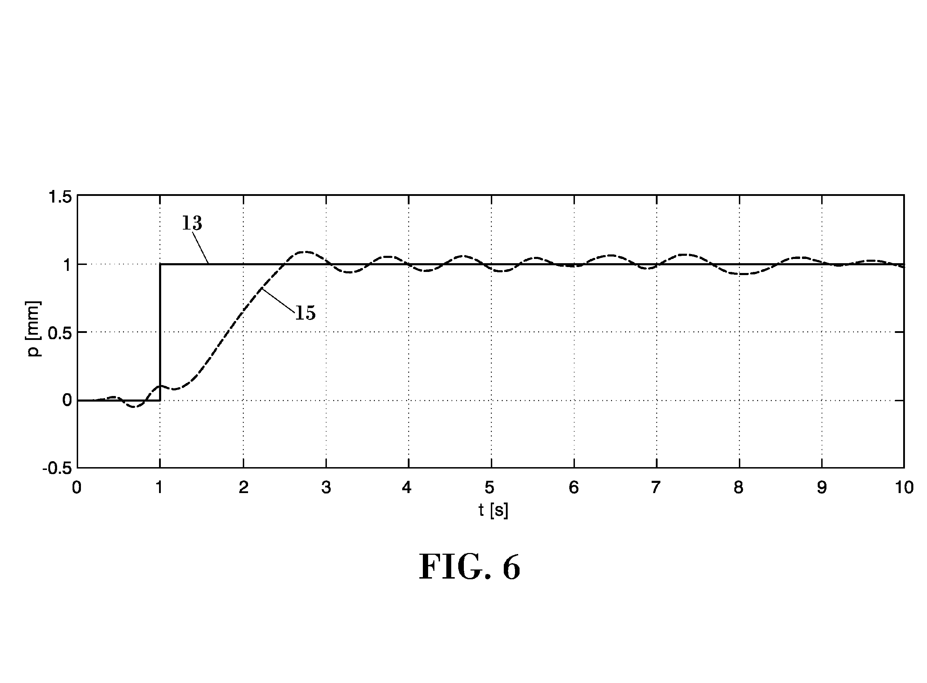

Below, figures 5 and 6 are commented which show the behaviour of two machines to the same situation, the need to weld two pieces with a penetration depth set at 1, being represented in the figures by a step (13), encountering at instant t=6 seconds an anomaly in the mechanical characteristics of the pieces to be welded. The X-axis and the Y-axis are, respectively, time and depth.

As observed in figure 5, the conventional machine, after a transitory period, stirs the metal pieces to be welded with a constant depth of the pin (2), according to the established programme. At instant t=6 the irregularity occurs in the material, different viscosity, hardness or any other parameter of the material of the metal pieces to be welded. The conventional machine responds to the irregularity reaching a new stationary state with an error in the high adaptation and maintained too much time, not being capable of measuring the penetration in the event of the discontinuity found. The evolution of the penetration of the conventional machine is represented by the broken line (14) of the figure.

Figure 6 represents the same situation as that previously commented wherein the machine is a machine according to the present invention. As commented previously, the pin (2) oscillates, with an oscillation around an average value which corresponds to the programmed penetration. Said oscillation (15) is represented in the figure by a broken line. However, thanks to the oscillations and to the greater reaction time that they provoke, at instant t=6 the pin adapts to the irregularity found.

Therefore, as can be seen in figures 5 and 6, the oscillation of the invention is the cause of the rapid adaptation of the machine tool due to the possible irregularities of the material to be welded, therefore improving the quality of the welding. In the same way, it could be reasoned if instead of being a discontinuity in the parameters of the material, it was a geometric discontinuity of said materials.

In light of this description and the set of figures, a person skilled in the art could understand that the invention has been described according to a preferred embodiment thereof, but multiple variations can be introduced in said preferred embodiment, without departing from the object of the invention as has been claimed.

## Claims

1. Machine tool for friction stir welding of two metal pieces that comprises a shoulder (1) with a flat end configured to apply pressure on the metal pieces to be welded and a retractable pin (2) at said flat end configured to heat and move a material of the metal pieces to be welded, the position of the pin (2) being controlled by a first control system and the position of the shoulder (1) by a second control system,
**characterized in that**
the first control system is configured to generate a forced oscillation of the pin (2) between a first penetration threshold (3) and a second penetration threshold (4).

2. Machine tool for friction stir welding according to claim 1, **characterized in that** a calculated theoretic penetration (5) is between the first penetration threshold (3) and the second penetration threshold (4).

3. Machine tool for friction stir welding according to any of claims 1-2, **characterized in that** the first control system with an input signal comprises a closed loop control with a control module (9) which produces a control signal having as input signal a deviation of the input signal of the control system, a plant (10) that acts on the pin (2) and additionally a relay (7) with a gain which is integrated en the plant (10), said relay (7) with a gain so that it causes the first control system to be unstable.

4. Machine tool for friction stir welding according to claim 3, **characterized in that** the gain of the relay (7) changes sign when the control signal changes sign.

5. Machine tool for friction stir welding according to claim 4, **characterized in that** the first control system comprises a white noise which is added to the control signal to be the input signal of the relay (7), said white noise configured to act as hysteresis for the change of sign of the relay (7) gain.

6. Machine tool for friction stir welding according to any of claims 3-5, **characterized in that** the first control system additionally comprises a gain changer (11) with an input signal and an output signal, the input signal of the gain changer (11) being related to the input signal of the control module (9) and the output signal affecting the value of the relay (7) gain.

7. Machine tool for friction stir welding according to any of claims 1-6, **characterized in that** the distance between the first penetration threshold (3) and the non-penetrated surface (6) of the metal pieces is less than 0.15 millimetres.

8. Machine tool for friction stir welding according to any of claims 1-7, **characterized in that** the distance between the second penetration threshold (4) and the non-penetrated surface (6) of the metal pieces is more than 0.05 millimetres.

9. Process for friction stir welding of two metal pieces by a machine tool that comprises a shoulder (1) with a flat end configured to apply pressure on the metal pieces to be welded and a retractable pin (2) at said flat end configured to heat and move a material of the metal pieces to be welded, **characterized in that** it comprises a stage of producing a forced oscillation of the pin (2) between a first penetration threshold (3) and a second penetration threshold (4).

10. Process according to claim 9, **characterized in that** between the first penetration threshold (3) and the second penetration threshold (4) is positioned a calculated theoretic penetration (5).

11. Process according to any of claims 9-10, **characterized in that** it comprises a stage of producing a gain that acts as input signal of a plant of a first feedback control system which controls the position of the pin (2), said plant acting on the pin (2), so that said gain causes the first control system to be unstable.

12. Process according to claim 11, **characterized in that** it comprises a stage of modifying the gain so that the forced oscillation of the pin (2) is maintained between the first penetration threshold (3) and the second penetration threshold (4).
